# DEMANDE DE BREVET EUROPEEN

(11) **EP 1 434 196 A1**
(43) Date de publication de la demande: **30.06.2004**
(21) Numéro de dépôt: 03293184.2
(22) Date de dépôt: 16.12.2003
(51) Int. Cl.: G10K 11/168, B29C 44/14

(54) **Procédé pour réaliser une pièce d'insonorisation d'épaisseur variable**

(30) Priorité: 23.12.2002 FR 0216542
(71) Demandeur: Faurecia Automotive Industrie, 92000 Nanterre (FR)
(72) Inventeur: Houyoux, Jean-Marie, 08210 Mouzon (FR); Marcel, Valérie, 55150 Brandeville (FR)
(74) Mandataire: Prieur, Patrick

(57) **Abrégé**

Procédé pour réaliser une pièce d'insonorisation du type masse-ressort comprenant les étapes suivantes :
a) réaliser une couche (2) de masse lourde d'épaisseur sensiblement constante,
b) déposer localement des ajouts (4) de masse lourde formant sur-épaisseur sur ladite couche de masse lourde d'épaisseur sensiblement constante, pour former avec cette dernière une couche d'isolation acoustique présentant une épaisseur variable,
c) déposer une couche ressort formant absorbeur acoustique sur la couche d'isolation acoustique, et lier ensemble la couche d'absorbeur acoustique et la couche d'isolation acoustique.

## Description

L'invention concerne un procédé pour réaliser une pièce d'insonorisation du type masse-ressort.

L'objet de l'invention est en particulier d'améliorer l'insonorisation d'un véhicule, tout en réduisant le poids de la pièce d'insonorisation et son coût. La pièce d'insonorisation est notamment destinée à venir entre le plancher et le tapis du véhicule ou entre le tablier et la planche de bord.

Il a déjà été prévu d'adapter les caractéristiques de la pièce d'insonorisation dans différentes zones afin de s'adapter aux différentes contraintes sonores auxquelles elle est soumise dans ces différentes zones. En particulier, US-A - 5 922 265 divulgue de réaliser une pièce d'insonorisation, en déposant à l'intérieur d'un moule une couche de masse lourde discontinue au moyen d'une buse d'extrusion mobile selon trois directions, puis en liant une couche d'absorbeur acoustique à la couche discontinue de masse lourde lors de la fermeture du moule.

Cette solution s'avère généralement relativement onéreuse dans la mesure où l'opération consistant à déposer la couche de masse lourde requiert un temps conséquent.

Il a par ailleurs été proposé de réaliser la masse lourde par injection. Toutefois cette solution nécessite un investissement relativement lourd et offre une flexibilité limitée pour faire varier localement l'épaisseur de masse lourde.

Pour résoudre ce problème, l'invention propose que l'on réalise successivement les étapes suivantes :
a) on réalise une couche de masse lourde d'épaisseur sensiblement constante,
b) on dépose localement des ajouts de masse lourde formant sur-épaisseur sur ladite couche de masse lourde d'épaisseur sensiblement constante, pour former avec cette dernière une couche d'isolation acoustique présentant une épaisseur variable,
c) on dépose une couche ressort formant absorbeur acoustique sur la couche d'isolation acoustique, et on lie ensemble la couche d'absorbeur acoustique et la couche d'isolation acoustique.

Cette solution permet d'optimiser aisément les caractéristiques d'insonorisation de la pièce finie en fonction des spécificités de chaque application. En outre, elle génère peu de pertes de matière d'isolant acoustique et d'absorbeur acoustique. Enfin, elle nécessite un investissement modéré et ne complique pas notablement le procédé d'obtention de la pièce d'insonorisation.

Selon une caractéristique avantageuse de l'invention, avant l'étape c), on thermoforme la couche de masse lourde d'épaisseur sensiblement constante.

Ainsi, on peut s'adapter étroitement à la forme de l'élément destiné à venir au contact de la masse lourde.

Afin de réduire encore le coût de la pièce d'insonorisation sans réduire ses performances, l'invention propose que lors de l'étape c), on réalise une couche de mousse d'épaisseur variable.

Ainsi, on pourra optimiser le rapport entre l'épaisseur de la couche d'insonorisation et celle la couche d'absorption, sachant que le rapport de prix entre les matières les constituant est généralement compris entre cinq et dix.

Pour ce faire, de préférence, on réalise la couche de mousse par moussage à l'intérieur d'un moule.

Ainsi, on obtient aisément la couche de mousse de la forme désirée sans perte de matière, ce qui est particulièrement avantageux compte tenu de son prix.

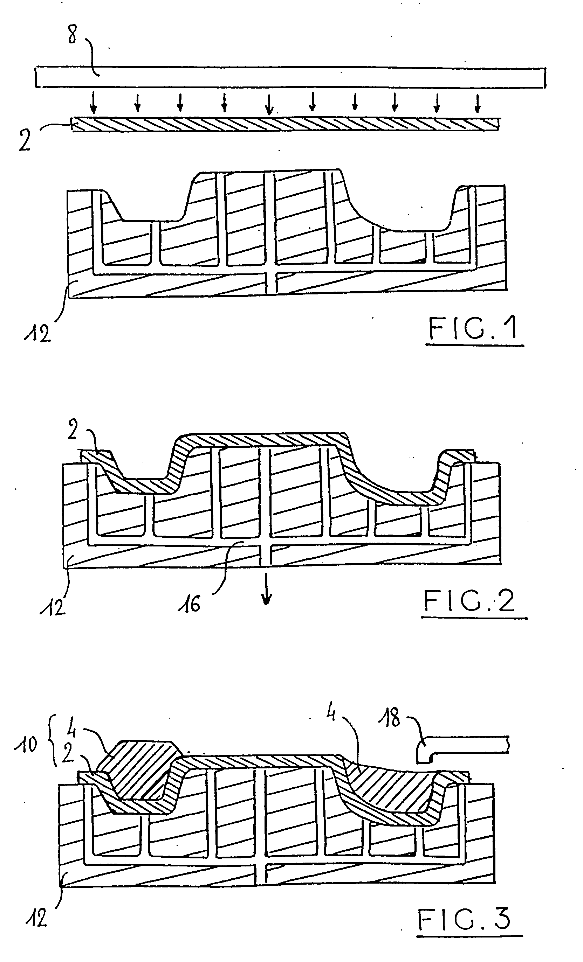

L'invention va apparaître encore plus clairement dans la description qui va suivre, faite en référence aux dessins annexés dans lesquels les figures 1 à 5 représentent cinq étapes successives d'un procédé conforme à l'invention.

La figure 1 représente une couche 2 de masse lourde obtenue notamment par calandrage et présentant une épaisseur sensiblement constante. Cette couche 2 de masse lourde est chauffée ici par une plaque rayonnante 8, avant d'être placée sur une matrice 12 de thermoformage.

La couche 2 de masse lourde est ensuite aspirée sous vide sur la matrice 12 par l'intermédiaire de moyens d'aspiration 16 ménagés dans la matrice 12, tel qu'illustré à la figure 2.

On vient ensuite déposer sur cette couche 2 de masse lourde, dans des zones déterminées, des compléments 4 de masse lourde formant localement sur-épaisseur au moyen d'une buse à lèvres 18 d'extrudeuse dont le déplacement est commandé par un robot. Les ajouts 4 de masse lourde se confondent alors avec la couche 2 de masse lourde d'épaisseur sensiblement constante pour former une couche d'isolation acoustique 10 d'épaisseur variable.

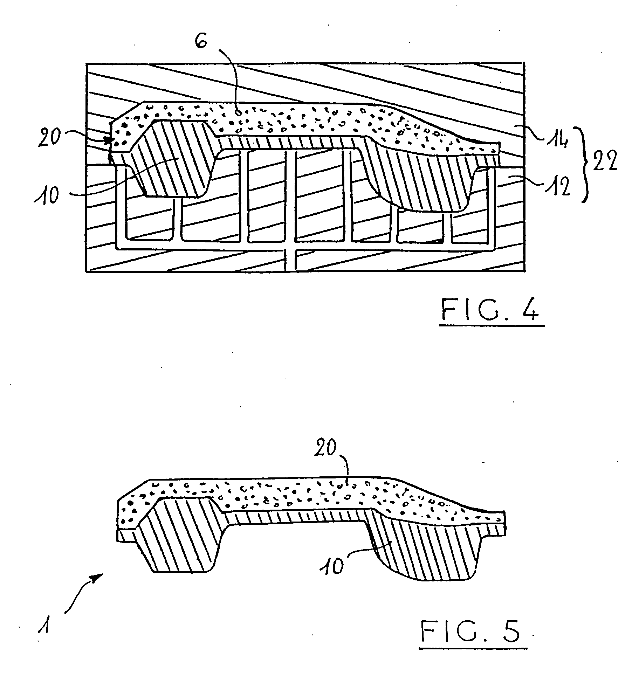

Tel qu'illustré à la figure 4, on amène ensuite un poinçon 14 au contact de la matrice 12 et on introduit dans la cavité 20, s'étendant entre la couche d'isolant acoustique 10 et le poinçon 14, de la mousse 6. Cette mousse s'expanse à l'intérieur de la cavité 20 jusqu'à la remplir complètement et former une couche 6 formant absorbeur acoustique liée à la couche 10 d'isolation acoustique. Autrement dit, la couche 6 d'absorbeur acoustique est réalisée par moussage à l'intérieur de la cavité 20 du moule 22 formé par la matrice 12 et le poinçon 14

Après démoulage, la pièce finie 1 comprend une couche 10 d'isolation acoustique et une couche 6 d'absorption acoustique présentant toutes deux des variations d'épaisseur.

La couche 10 d'isolation acoustique réalise la fonction masse (barrière) de la pièce d'insonorisation 1. Son épaisseur varie avantageusement sensiblement entre 0,1 et 5 millimètres. Elle est avantageusement réalisée en matériau thermoplastique de type polyoléfine (Ethylène Vinyle Acétate, PolyEthylène, Ethylène Propylène Diène Monomère) et incorpore des déchets du type bitume, craie et/ ou sulfate de baryum permettant d'obtenir une densité élevée pour peu cher. De préférence, son module d'Young est inférieur à 1 000 MPa et elle présente une densité supérieure ou égale à 1 500 Kg/m³.

La couche 6 d'absorption acoustique est disposée du côté de la source du bruit à insonoriser. Elle réalise la fonction ressort de la pièce d'insonorisation 1 en découplant mécaniquement la masse lourde de l'élément sur lequel la pièce d'insonorisation est fixée. En outre, la couche 6 est poreuse afin de procurer une bonne absorption acoustique. La couche 6 d'absorption acoustique est donc poro-élastique. Son épaisseur varie avantageusement sensiblement entre 5 et 30 millimètres. Elle peut être réalisée en matériau plastique, avantageusement du polyuréthane. De préférence, sa densité est comprise entre 15 Kg/m³ et 100 Kg/m³.

Bien entendu, l'invention n'est nullement limitée à la réalisation qui vient d'être décrite à titre d'exemple non limitatif. Ainsi, en alternative, on pourrait réaliser la couche ressort par dépose sélective de feutre, afin d'obtenir au final une couche ressort formant absorbeur élastique iso-densité en feutre.

On pourrait également déposer les compléments 4 de masse lourde formant sur-épaisseur avant mise en forme de la couche 2 de masse lourde. Ainsi, la couche 2 étant à plat lorsque les compléments sont déposés dessus, le dépôt au moyen d'une extrudeuse est plus aisé.

## Revendications

1. Procédé pour réaliser une pièce d'insonorisation (1) du type masse-ressort comprenant les étapes suivantes :
a) réaliser une couche (2) de masse lourde d'épaisseur sensiblement constante,
b) déposer localement des ajouts (4) de masse lourde formant sur-épaisseur sur ladite couche de masse lourde d'épaisseur sensiblement constante, pour former avec cette dernière une couche (10) d'isolation acoustique présentant une épaisseur variable,
c) déposer une couche (6) ressort formant absorbeur acoustique sur la couche (10) d'isolation acoustique, et lier ensemble la couche d'absorbeur acoustique (6) et la couche (10) d'isolation acoustique.

2. Procédé selon la revendication 1, **caractérisé en ce qu'**avant l'étape c), on thermoforme la couche (2) de masse lourde d'épaisseur sensiblement constante.

3. Procédé selon la revendication 1 ou selon la revendication 2, **caractérisé en ce que** lors de l'étape c), on réalise une couche de mousse (6) d'épaisseur variable.

4. Procédé selon la revendication 3, **caractérisé en ce que** l'on réalise la couche (6) de mousse par moussage à l'intérieur d'un moule.
